# EUROPEAN PATENT APPLICATION

(11) **EP 2 747 254 A2**
(43) Date of publication of application: **25.06.2014**
(21) Application number: 13197447.9
(22) Date of filing: 16.12.2013
(51) Int. Cl.: H02K 9/18

(54) **Rotating electrical machine and housing for rotating electrical machine**

(30) Priority: 20.12.2012 JP 2012277942; 27.09.2013 JP 2013202274
(71) Applicant: Kabushiki Kaisha Yaskawa Denki, Kitakyushu-shi, Fukuoka 806-0004 (JP)
(72) Inventor: Miyamoto, Yasuhiro, Kitakyushu-shi, Fukuoka 806-0004 (JP); Hirowatari, Kotaro, Kitakyushu-shi, Fukuoka 806-0004 (JP); Tsumagari, Hiroshi, Kitakyushu-shi, Fukuoka 806-0004 (JP)
(74) Representative: Viering, Jentschura & Partner Patent- und Rechtsanwälte

(57) **Abstract**

A housing (40, 140) of a rotating electrical machine (10, 101), includes: a plurality of heat exchangers (50, 150) attached to an outer surface of the housing to cool a gas circulating in the housing; and a first partition wall portion (44, 144) disposed in an interior of the housing to partition the interior of the housing.

## Description

### CROSS-REFERENCE TO RELATED APPLICATION

This application is based on Japanese Patent Application Nos. 2012-277942 filed on December 20, 2012 and 2013-202274 filed on September 27, 2013 with the Japan Patent Office the entire contents of which are hereby incorporated by reference.

### BACKGROUND

### 1. Technical Field

The present disclosure relates to rotating electrical machines and housings for the rotating electrical machines.

### 2. Related Art

Heretofore, electric machines including stators and rotators have been known in the art (see, for example, JP-A No. 2002-537748). JP-A No. 2002-537748 describes an electric machine including a rotator fixed to a shaft and a stator opposed to the rotator. In the electric machine, the shaft is formed hollow. The rotator has an impeller at the axial end of the rotator. The stator has a cooling fin at the one radially outer side (one side). The rotator, the stator, and the cooling fin are covered with a housing. When the impeller rotates together with the rotator, air flows through the hollow shaft in the axial direction. Subsequently, the air flows through the axial end of the rotator, the axial end of the stator, and the cooling fin. Thus, the air circulating in the electric machine (housing) cools the interior of the electric machine (the stator, the rotator, and others). An annular guide plate is disposed at the axial end of the rotator independently from the rotator to guide the air flowing axially in the hollow shaft to the outer peripheral side (cooling fin side).

However, since the electric machine described in JP-A No. 2002-537748 has the annular-shaped guide plate for guiding the air flowing axially in the hollow shaft to a cooling fin side, the guide plate guides the air in all radial directions of hollow shaft. Thus, the guide plate also guides the air in a direction not toward the cooling fin disposed at the one side of the stator. In some cases, therefore, the air may not be guided to the cooling fin side. As a result, the interior of the electric machine may not be cooled sufficiently.

An object of the present disclosure is to provide a rotating electrical machine the interior of which can be sufficiently cooled and housing for the rotating electrical machine.

### SUMMARY

A housing of a rotating electrical machine in the first aspect of the present disclosure includes: a plurality of heat exchangers attached to an outer surface of the housing and configured to cool a gas circulating in the housing; and a first partition wall portion disposed in an interior of the housing to partition the interior of the housing.

In a housing for a rotating electrical machine according to a first aspect, a plurality of heat exchangers is attached to the outer surface of the housing to cool air circulating in the housing. A first partition wall portion is disposed in the interior of the housing to partition the housing. This makes it possible to suppress a situation where air circulating in the housing flows beyond circulation regions partitioned by the first partition wall portion. Thus, the air can be efficiently guided to the heat exchangers. As a result, the air can be efficiently cooled by the heat exchangers. Therefore, the interior of the rotating electrical machine can be cooled sufficiently.

### BRIEF DESCRIPTION OF DRAWINGS

Fig. 1 is a diagram illustrating an overall configuration of a wind generator system in a first embodiment;
Fig. 2 is a perpendicular partial cross section view of a generator in the first embodiment;
Fig. 3 is a cross section view of the generator in the first embodiment;
Fig. 4 is a diagram of an inner surface of a bracket at a side of the generator opposite to a side at which heat exchangers are disposed in the first embodiment;
Fig. 5 is a diagram of an inner surface of a bracket at the side of the generator at which the heat exchangers are disposed in the first embodiment;
Fig. 6 is a diagram of an outer surface of the bracket at the side of the generator at which the heat exchangers are disposed in the first embodiment;
Fig. 7 is a perspective view of the heat exchanger for the generator in the first embodiment;
Fig. 8 is a cross section view of a generator in a second embodiment;
Fig. 9 is an upper surface view of a stator for the generator in the second embodiment;
Fig. 10 is a perspective view of the stator for the generator in the second embodiment; and
Fig. 11 is a perspective view of a rotor for the generator in the second embodiment.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Embodiments will be described below with reference to the drawings.

### (First embodiment)

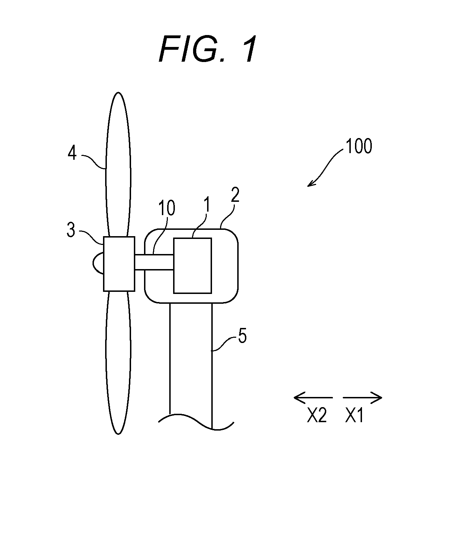

First, referring to Fig. 1, a configuration of a wind generator system 100 will be described.

As illustrated in Fig. 1, the wind generator 100 includes a generator 1, a nacelle 2 for storing the generator 1, a rotor hub 3, a blade 4, and a tower (support column) 5. The generator 1 is stored in the nacelle 2. The rotor hub 3 is attached to a shaft 10 described later of the generator 1. The rotor hub 3 also has a plurality of blades 4 attached thereto. The nacelle 2 is attached to the tower 5.

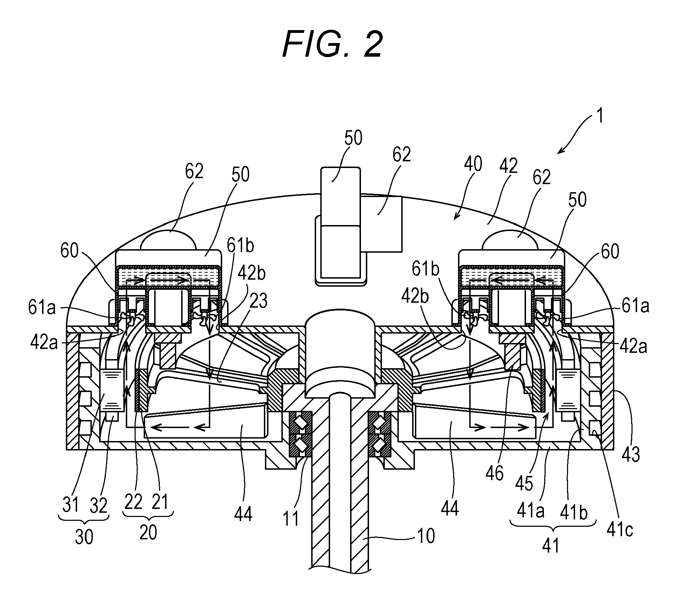

Next, a configuration of the generator 1 in the first embodiment will be described with reference to Figs. 2 to 7. The generator 1 is one example of a rotating electrical machine.

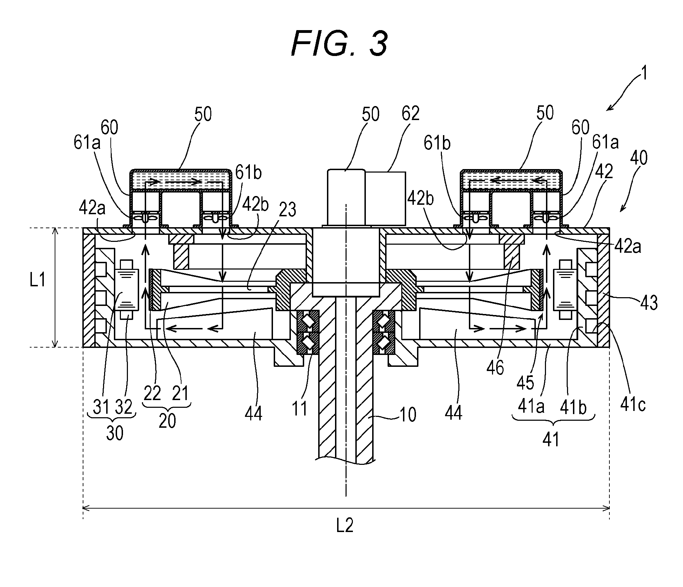

As illustrated in Figs. 2 and 3, the generator 1 includes the shaft 10, a rotor 20, a stator 30, a housing 40 storing the rotor 20 and the stator 30, and heat exchangers 50. The shaft 10 is connected to the rotor 20. A bearing 11 is disposed between the shaft 10 and the housing 40. The housing 40 includes brackets 41 and 42 and a jacket 43. In the first embodiment, the generator 1 has a flat shape such that axial length L1 is shorter than radial length L2 (diameter of the brackets 41 and 42). The generator 1 is a low/medium-speed generator 1 with a rotation speed of 10 or more and 400 or less per minute.

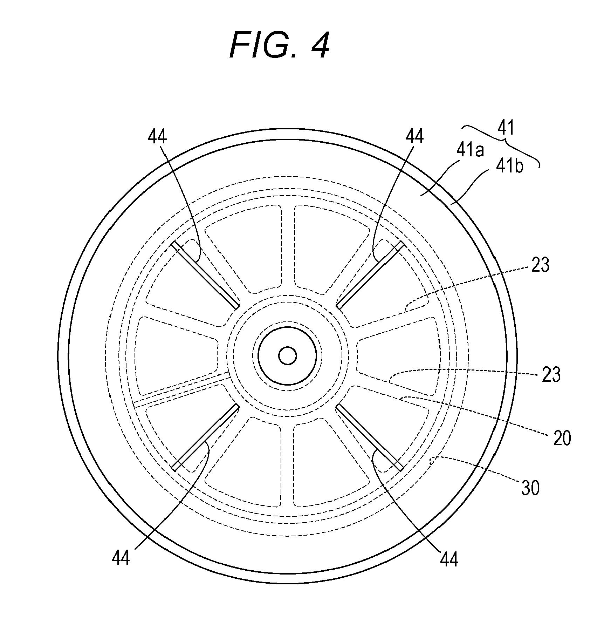

The rotor 20 includes a rotor core 21 and a plurality of permanent magnets 22 attached to the outermost peripheral part of the rotor core 21. In the first embodiment, the rotor 20 (rotor core 21) is provided with a plurality of (10 in the first embodiment as illustrated in Fig. 4) axially penetrating hole portions 23. The hole portions 23 are one example of a first hole portion.

The stator 30 is opposed to the outer peripheral portion of the rotor 20. The stator 30 includes a stator core 31 and a coil 32 wound around a slot (not illustrated) of the stator core 31. The stator 30 is attached to an inner surface of a bracket 41 described later.

The bracket 41 includes a bottom portion 41a in an annular shape when viewed in the axial direction and a side wall portion 41b disposed at an outer edge of the bottom portion 41a. In the first embodiment, a flow passage 41c is circumferentially formed in a surface (outer surface) of the side wall portion 41b and disposed separately from the heat exchangers 50. Cooling water is flown through the flow passage 41c to cool the interior of the housing 40. Specifically, the flow passage 41c includes a space surrounded by the side wall portion 41b of the bracket 41 and the jacket 43.

In the first embodiment, a plurality of (four in the first embodiment) partition wall portions 44 is disposed in the interior of the housing 40. The partition wall portions 44 partition the interior of the housing 40 into a plurality of (four in the first embodiment) air circulation regions. Specifically, as illustrated in Fig. 4, the partition wall portions 44 are disposed in an inner surface of the bottom portion 41a of the bracket 41. The partition wall portions 44 radially extend in the radial direction in the interior of the housing 40 (in the inner surface of the bottom portion 41a of the bracket 41) to partition the interior of the housing 40. The plurality of partition wall portions 44 is arranged in the interior of the housing 40 (in the inner surface of the bottom portion 41a of the bracket 41) at approximately equiangular (approximate 90-degree) intervals when viewed in the axial direction. Specifically, the plurality of partition wall portions 44 is arranged at positions in a line-symmetric form when viewed in the axial direction, with respect to a straight line passing through the center of the bracket 41 on the bottom portion 41a. The partition wall portions 44 are one example of a first partition wall portion.

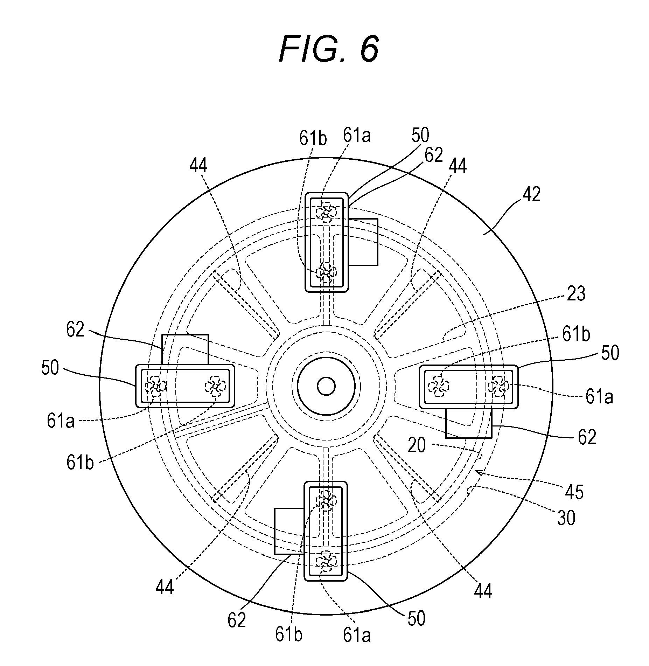

In the first embodiment, the same number of partition wall portions 44 as the number of heat exchangers 50 (four in the first embodiment as illustrated in Fig. 6) are disposed in the interior of the housing 40 (in the inner surface of the bottom portion 41a of the bracket 41). In addition, as illustrated in Fig. 6, the partition wall portions 44 are arranged to partition the interior of the housing 40 into a plurality of circulation regions corresponding to the heat exchangers 50 when viewed in the axial direction. Specifically, the partition wall portions 44 are arranged between two heat exchangers 50 adjacent to each other in the circumferential direction when viewed in the axial direction. That is, the partition wall portions 44 are arranged at positions circumferentially shifted by approximate 45 degrees from the heat exchangers 50 when viewed in the axial direction.

As illustrated in Fig. 3, the partition wall portions 44 are formed such that height of the partition wall portions 44 from the inner surface of the bracket 41 gradually becomes smaller with increasing proximity to the outer peripheral side of the bracket 41 when viewed in the direction orthogonal to the axial direction (in a tapered form). The partition wall portions 44 are disposed separately from the bracket 41 and may be made of, for example, resin.

The bracket 42 is formed in an annular shape when viewed in the axial direction. In the first embodiment, a plurality of (four in the first embodiment) heat exchangers 50 is disposed in the axial outer surface of the bracket 42. The heat exchangers 50 cools air circulating in the housing 40 (between the housing 40 and the heat exchangers 50) through the hole portions 23 of the rotor 20 and a gap 45 between the rotor 20 and the stator 30. As illustrated in Fig. 6, the four heat exchangers 50 are disposed in the outer surface of the bracket 42 at approximately equiangular (approximate 90- degree) intervals when viewed in the axial direction. Specifically, the four heat exchangers 50 are arranged at a linear-symmetric position with respect to a straight line passing through the center of the bracket 42 when viewed in the axial direction.

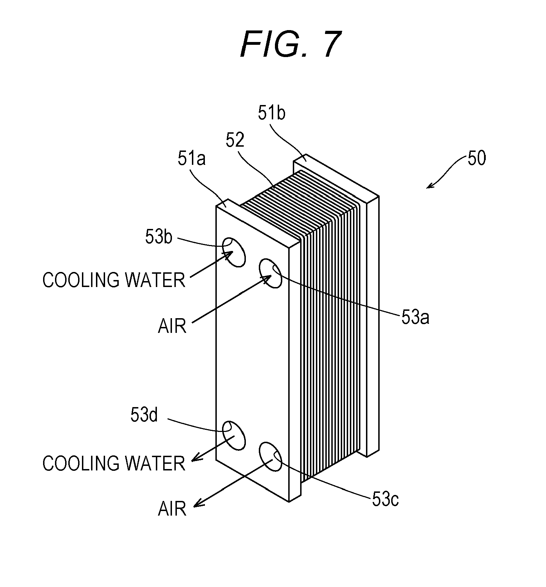

As illustrated in Fig. 3, the bracket 42 is provided with hole portions 42a and hole portions 42b. The hole portions 42a let air in the housing 40 flow toward the heat exchangers 50. The hole portions 42b let air cooled by the heat exchangers 50 flow into the housing 40. The hole portions 42a are formed at the outer peripheral side than the hole portions 42b. The hole portions 42a and the hole portions 42b of the bracket 42 and hole portion 53a and 53c of the heat exchangers 50 (refer to Fig. 7) are connected by connection parts 60.

As illustrated in Figs. 2 and 3, in the first embodiment, fans 61a and 61b are disposed between the heat exchangers 50 and the partition wall portions 44 (the hole portions 42a and the hole portions 42b of the bracket 42). The fans 61a and 61b let air circulate between the heat exchangers 50 and the partition wall portions 44. The fans 61a and 61b are disposed independently from the rotor 20. The fans 61a have the function of sucking air from the housing 40 into the heat exchangers 50 via the hole portions 42a. The fans 61a are configured to overlap the gap 45 when viewed in the axial direction (refer to Fig. 6). The fans 61b have the function of releasing the air from the heat exchangers 50 toward the housing 40. The fans 61b are configured to overlap the hole portions 23 when viewed in the axial direction (refer to Fig. 6). The interior of the housing 40 is sealed. The interior of the housing 40 and the heat exchangers 50 are connected in the sealed state to suppress or avoid entry of outside air. That is, the generator 1 in the first embodiment is configured such that the air circulating between the interior of the housing 40 and the heat exchangers 50 is less prone to contact outside air. In addition, a motor 62 for driving the fans 61a and 61b is disposed adjacent to the heat exchangers 50 (refer to Fig. 2).

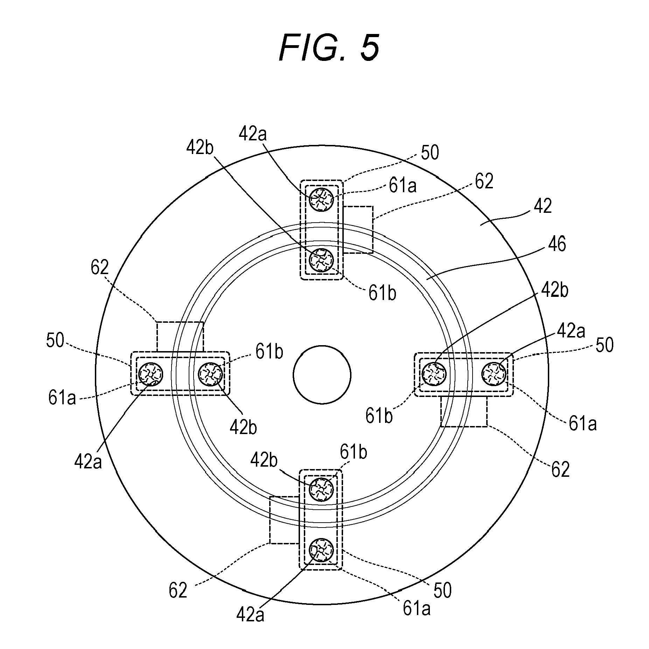

In addition, as illustrated in Figs. 1 and 2, a partition wall portion 46 is disposed in the interior of the bracket 42 (in the inner surface). Thus, the partition wall portion 46 prevents the air, which flows from the heat exchangers 50 into the housing 40, from flowing toward the gap 45 between the rotor 20 and the stator 30. As illustrated in Fig. 5, the partition wall portion 46 is disposed in the interior of the bracket 42 (in the inner surface) and formed in an annular shape when viewed in the axial direction. The partition wall portion 46 is also protruded from the inner surface of the bracket 42 in the axial direction (toward the bracket 41). The partition wall portion 46 is disposed between the hole portions 42a and the hole portions 42b of the bracket 42 when viewed in the axial direction. In addition, the partition wall portion 46 is disposed separately from the bracket 42 and is made of, for example, resin. The partition wall portion 46 is one example of a third partition wall portion.

In the first embodiment, as illustrated in Fig. 6, a plurality of (four in the first embodiment) heat exchangers 50 is disposed. The four heat exchangers 50 are disposed in the outer surface of the housing 40 (bracket 42) at approximately equiangular (approximate 90-degree) intervals when viewed in the axial direction.

In addition, as illustrated in Fig. 7, the heat exchangers 50 include plate-type heat exchangers, for example. Each of the heat exchangers 50 includes a front frame 51a, a back frame 51b, and a plurality of plates 52. The plurality of plates 52 is disposed between the front frame 51a and the back frame 51b, and is made of stainless steel, for example. In addition, each of the heat exchangers 50 is provided with four hole portions 53a, 53b, 53c, and 53d. Air flowing from the hole portion 53a into the housing 40 and a refrigerant flowing from the hole portion 53b (cooling water flowing through the flow passage 41c) are subjected to heat exchange via the plates 52. Accordingly, the air is cooled. After the heat exchange, the cooled air and the refrigerant are released from the hole portion 53c and the hole portion 53d.

Next, referring to Figs. 1 and 2, circulation of air in the generator 1 will be described.

First, as illustrated in Figs. 2, 3, and 7, high-temperature air in the vicinity of the gap 45 between the rotor 20 and the stator 30 is sucked by the fans 61a into the hole portions 53a of the heat exchangers 50. Then, the air is cooled by the refrigerant flowing from the hole portions 53b of the heat exchangers 50. The cooled low-temperature air is released by the fans 61b from the hole portions 53c into the housing 40. The low-temperature air released into the housing 40 reaches the inner surface of the bracket 41 via the hole portions 23 of the rotor 20. The partition wall portion 46 is disposed between the hole portions 42a and the hole portions 42b of the bracket 42. Thus, the low-temperature air released into the housing 40 hardly flows to the fans 61a. Therefore, the low-temperature air is less prone to be sucked by the fans 61a.

The low-temperature air having reached the inner surface of the bracket 41 flows to the outer peripheral side on the inner surface of the bracket 41 partitioned by the partition wall portions 44. After that, the low-temperature air reaches the vicinity of the gap 45 between the rotor 20 and the stator 30. Thus, the permanent magnets 22 of the rotor 20 and the coil 32 of the stator 30 at relatively high temperatures are cooled. After cooling the permanent magnets 22 and the coil 32, the air becomes high in temperature. The air is sucked again by the fans 61a into the heat exchangers 50. By circulating the air as described above, the permanent magnets 22 are sufficiently cooled. This reduces the need to include dysprosium or the like as a rare-earth element in the permanent magnets 22 to suppress deterioration of temperature characteristics.

The first embodiment can achieve the following advantages.

In the first embodiment, as described above, the plurality of heat exchangers 50 is attached to the outer surface of the housing 40. The heat exchangers 50 are configured to cool air circulating in the housing 40 through the hole portions of the rotor 20 and the gap 45 between the rotor 20 and the stator 30. The partition wall portions 44 are disposed in the interior of the housing 40. The partition wall portions 44 are configured to partition the interior of the housing 40 into the plurality of air circulation regions. This suppresses a situation where the air circulating in the housing 40 flows beyond the circulation regions partitioned by the partition wall portions 44 (flows in the circumferential direction). Thus, the air can be efficiently guided toward the heat exchangers 50. As a result, the air can be efficiently cooled by the heat exchangers 50. Therefore, the interior of the generator 1 can be efficiently cooled.

In the first embodiment, as described above, the plurality of partition wall portions 44 radially extends in the radial direction in the housing 40 to partition the interior of the housing 40 in the circumferential direction. Thus, the interior of the housing 40 is partitioned in the circumferential direction. This can easily suppress a situation where the air flows in the circumferential direction in the housing 40. That is, the air in the housing 40 is prone to flow to the outside in the radial direction. Thus, the air can be more efficiently guided toward the heat exchangers 50. In addition, the partition wall portions 44 are disposed in the radial form. As a result, the air can be easily guided to the outer peripheral side (gap 45 side) of the housing 40.

In the first embodiment, as described above, the plurality of partition wall portions 44 is disposed in the interior of the housing 40 at approximately equiangular intervals when viewed in the axial direction. Thus, the interior of the housing 40 is partitioned in an approximately equal manner in the circumferential direction. That is, the plurality of approximately equal circulation regions is formed. As a result, the circulation regions are equally cooled. Therefore, variations in temperature within the housing 40 can be reduced.

In the first embodiment, as described above, the fans 61a and 61b are disposed independently from the rotor 20 between the heat exchangers 50 and the partition wall portions 44. The fans 61a and 61b let air circulate between the heat exchangers 50 and the partition wall portions 44. Thus, the air is forcedly circulated in the housing 40 by the fans 61a and 61b. Thus, unlike the case in which the air is circulated in the housing 40 by the fans disposed in the rotor 20, the air can be efficiently guided toward the heat exchangers 50 in the housing 40, regardless of the rotation speed of the rotor 20.

In the first embodiment, as described above, the plurality of heat exchangers 50 is attached to the outer surface of the housing 40 in the axial direction. In addition, the same number of partition wall portions 44 as the number of the plurality of heat exchangers 50 is disposed in the interior of the housing 40. The partition wall portions 44 are also arranged to partition the interior of the housing 40 into the plurality of circulation regions corresponding to the heat exchangers 50 when viewed in the axial direction. This makes it possible to assign the heat exchangers 50 one by one to the circulation regions. As a result, temperature variations can be prevented from occurring in the circulation regions.

In the first embodiment, as described above, the plurality of heat exchangers 50 is disposed in the outer surface of the housing 40 at approximately equiangular intervals when viewed in the axial direction. Thus, unlike the case where the plurality of heat exchangers 50 is unevenly arranged, temperature variations can be easily prevented from occurring in the circulation regions.

In the first embodiment, as described above, the partition wall portion 46 is disposed in the interior of the housing 40 at the heat exchanger 50 side. The partition wall portion 46 is configured to suppress a situation where the air flowing from the heat exchangers 50 into the housing 40 flows toward the gap 45 between the rotor 20 and the stator 30. Thus, the air cooled by the heat exchangers 50 can be prevented from flowing toward the gap 45 without passing through the rotor 20 and flows again into the heat exchangers 50. Therefore, the interior of the generator 1 can be efficiently cooled.

In the first embodiment, as described above, the partition wall portion 46 is disposed in the housing 40 in an annular shape when viewed in the axial direction. This makes it possible to suppress a situation where the air cooled by the heat exchangers 50 flows to the outside in the radial direction, without passing through the rotor 20. Thus, the interior of the generator 1 can be cooled in a more efficient manner.

In the first embodiment, as described above, the interior of the housing 40 and the heat exchangers 50 are connected in the sealed state to suppress or avoid entry of outside air. Thus, the members (the rotor 20, the stator 30, and the like) in the housing 40 can be prevented from deteriorating due to entry of outside air into the interior of the housing 40. Specifically, in the case of installing the wind generator 100 in the ocean, erosion of the members in the housing 40 is prone to progress by entry of sea wind including salt into the interior of the housing 40. Thus, the interior of the housing 40 and the heat exchangers 50 can be effectively connected to each other in the sealed state.

In the first embodiment, as described above, the plurality of heat exchangers 50 is attached to the outer surface of the housing 40 in the axial direction. In addition, the flow passage 41c is circumferentially formed in the surface of the housing 40 in the radial direction, separately from the heat exchangers 50. Cooling water flows through the flow passage 41c to cool the interior of the housing 40. Thus, the interior of the generator 1 is cooled by the plurality of heat exchangers 50 plus the cooling water flowing through the flow passage 41c. Thus, the interior of the generator 1 can be cooled in a more sufficient manner.

In the first embodiment, as described above, the generator 1 is configured to have a flat shape in which the axial length L1 is shorter than the radius length L2. This shortens the distance between the plurality of heat exchangers 50 and the housing 40 at the side opposite to the heat exchanger 50 side (bracket 41). Therefore, the air can be easily circulated between the plurality of heat exchangers 50 and the bracket 41.

In the first embodiment, as described above, the generator 1 is a low/medium-speed generator 1. In general, internal air is less prone to circulate in a low/medium-speed generator due to a low rotation speed. However, the generator 1 in the first embodiment has the foregoing cooling structure and thus can cool the interior of the generator 1 in a more sufficient manner.

### (Second embodiment)

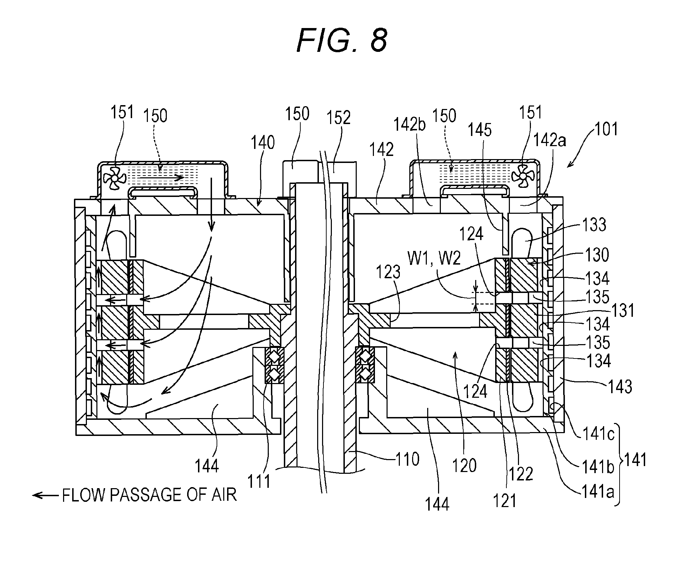

Next, referring to Figs. 8 to 11, a configuration of a generator 101 in a second embodiment will be described. In the second embodiment, the generator 101 is a wind generator. The generator 101 is an example of a rotating electrical machine.

As illustrated in Fig. 8, the generator 101 includes a shaft 110, a rotor 120, a stator 130, a housing 140 storing the rotor 120 and the stator 130, and heat exchangers 150. The shaft 110 is connected to the rotor 120. A bearing 111 is disposed between the shaft 110 and the housing 140. The housing 140 also contains brackets 141 and 142 and a jacket 143.

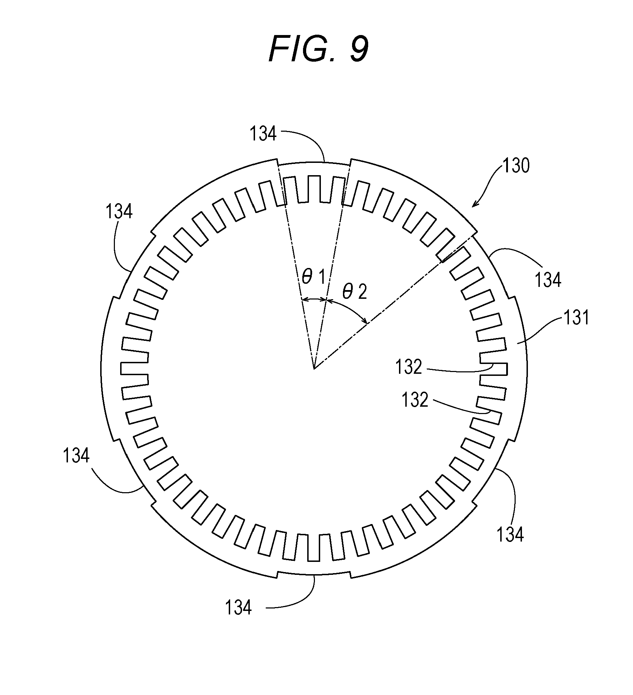

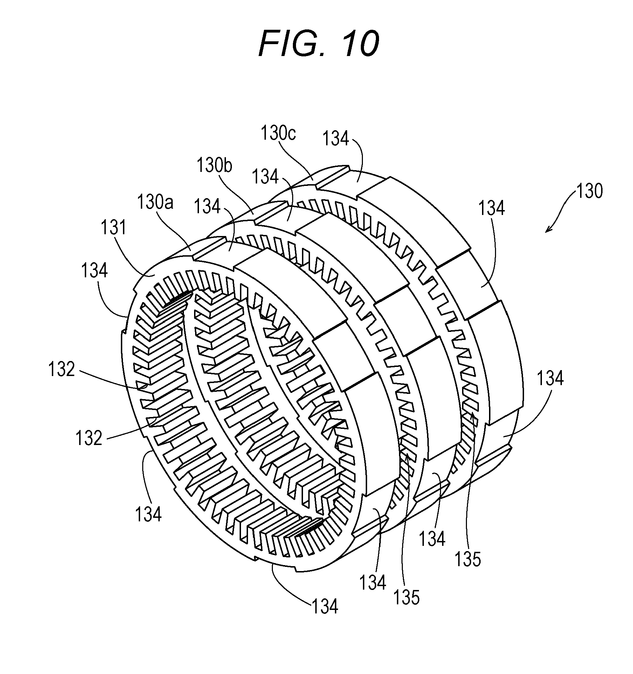

As illustrated in Fig. 8, the stator 130 is opposed to an outer peripheral portion of the rotor 120. In addition, as illustrated in Figs. 8, 9, and 10, the stator 130 includes a stator core 131 and a coil 133 (refer to Fig. 8) wound around slots 132 (refer to Figs. 9 and 10) of the stator core 131.

In the second embodiment, as illustrated in Figs. 8 to 10, the stator 130 includes a first air passage portion 134 through which air passes. The first air passage portion 134 is configured to penetrate the outer peripheral side of the stator 130 in the axial direction. The air circulates in the housing 140 through first hole portions 123 of the rotor 120 and first air passage portions 134 of the stator 130. The stator 130 also includes second air passage portions 135. The second air passage portions 135 are configured to penetrate the stator 130 in the radial direction and are connected to the first air passage portions 134. The first air passage portions 134 and the second air passage portions 135 are examples of a first air passage portion and a second air passage portion, respectively.

Specifically, as illustrated in Fig. 10, the stator 130 has three annular stator portions 130a, 130b, and 130c. The three stator portions 130a, 130b, and 130c are arranged adjacent to each other at predetermined intervals in the axial direction (attached to the housing 140). The notch-shaped first air passage portions 134 are formed in the outer peripheral sides of the three stator portions 130a, 130b, and 130c. The air flows in a space surrounded by the first air passage portions 134 and the housing 140. The second air passage portion 135 is formed by an area (space) between the stator portion 130a and the stator portion 130b. Similarly, the second air passage portion 135 is formed by an area (space) between the stator portion 130b and the stator portion 130c.

As illustrated in Figs. 9 and 10, a plurality of (six in the second embodiment) first air passage portions 134 is formed in the outer peripheral sides of the stator 130 (stator portions 130a, 130b, and 130c) when viewed in the axial direction. The plurality of first air passage portions 134 is arranged at the stator 130 at approximately equiangular intervals (approximate 60-degree intervals) when viewed in the axial direction. In addition, the first air passage portions 134 are formed in an arc-like shape when viewed in the axial direction. One first air passage portion 134 has a central angle θ1 of approximate 20 degrees. A portion of the stator 130 (fan-shaped portion) between the two adjacent first air passage portions 134 has a central angle θ2 of approximate 40 degrees. Each of the three stator portions 130a, 130b, and 130c is provided with the slots 132. The coil 133 is wound over the three stator portions 130a, 130b, and 130c.

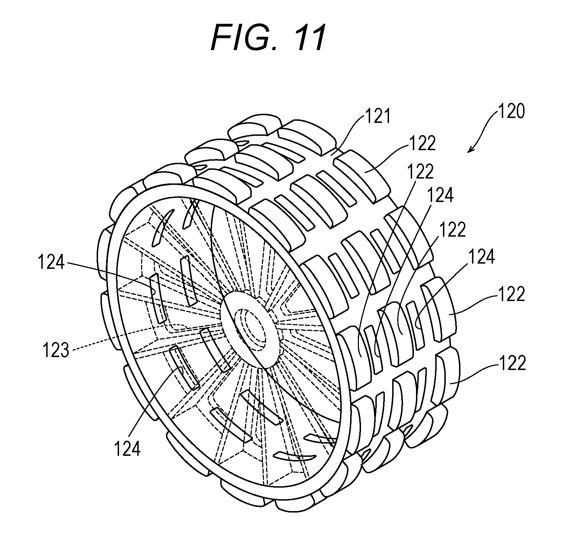

As illustrated in Figs. 8 and 11, the rotor 120 includes a rotor core 121 and a plurality of permanent magnets 122 attached to the outermost peripheral portion of the rotor core 121. As in the first embodiment (refer to Fig. 4), the rotor 120 (rotor core 121) is provided with a plurality of axially penetrating first hole portions 123. Fig. 11 represents a wheel portion of the rotor 120 (at which the first hole portions 123 are provided) with dotted lines.

In the second embodiment, as illustrated in Figs. 8 to 10, the rotor 120 is provided with a plurality of second hole portions 124. The second hole portions 124 are formed to penetrate the rotor 120 in the radial direction at positions corresponding to the second air passage portions 135 of the stator 130. Specifically, as illustrated in Fig. 8, the second hole portions 124 are formed such that the height of the second hole portions 124 become approximately equal to the height of the second air passage portions 135 of the stator 130. In addition, axial width W1 of the second hole portions 124 is approximately equal to axial width W2 of the second air passage portions 135 of the stator 130. As illustrated in Fig. 11, a plurality of (two in the second embodiment) the second hole portions 124 is formed in the axial direction. In addition, a plurality of (14 in the second embodiment) second hole portions 124 is formed in the circumferential direction.

As illustrated in Fig. 11, a plurality of permanent magnets 122 is arranged so as not to cover the second hole portions 124. A plurality of (three in the second embodiment) permanent magnets 122 is arranged in the axial direction at intervals therebetween. Specifically, when viewed in the radial direction (the outer peripheral side of the rotor 120), the permanent magnet 122, the second hole portion 124, the permanent magnet 122, the second hole portion 124, and the permanent magnet 122 are arranged in this order in the axial direction. In addition, a plurality of (14 in the second embodiment) permanent magnets 122 is arranged in the circumferential direction, as with the second hole portions 124.

As illustrated in Fig. 8, the bracket 141 includes a bottom portion 141a in the annular shape when viewed in the axial direction and a side wall portion 141b. The side wall portion 141b is disposed at an outer edge portion of the bottom portion 141a. In the second embodiment, a flow passage 141c is formed in the housing 140 at a portion opposed to the first air passage portions 134 of the stator 130. Cooling water flows through the flow passage 141c to cool the interior of the housing 140. Specifically, the flow passage 141c is circumferentially formed in an outer side surface of the side wall portion 141b. The flow passage 141c includes a space surrounded by the side wall portion 141b of the bracket 141 and the jacket 143.

A plurality of (four in the second embodiment) partition wall portions 144 is disposed in the interior of the housing 140. The partition wall portions 144 partition the interior of the housing 140 into a plurality of (4 in the second embodiment, as in the first embodiment, as illustrated in Fig. 4) air circulation regions. In addition, the partition wall portions 144 extend radially in the radial direction in the interior of the housing 140 to partition the interior of the housing 140 in the circumferential direction. The partition wall portions 144 are disposed in the inner surface of the bottom portion 141a of the bracket 141. The partition wall portions 144 function as ribs to enhance the bottom portion 141a in mechanical strength. The partition wall portions 144 are one example of a first partition wall portion.

The bracket 142 is formed in the annular shape when viewed in the axial direction. A plurality of (four in the second embodiment) heat exchangers 150 is disposed in the axially outer surface of the bracket 142. The heat exchangers 150 are configured to cool the interior of the housing 140. For example, the heat exchangers 150 are configured such that the cooling liquid flows into the heat exchangers 150 through the flow passage 141c of the housing 140. In this case, the heat exchangers 150 are configured to cool the air in the housing 140 by causing heat exchange between the cooling liquid and the air in the housing 140.

The bracket 142 is provided with the hole portions 142a and the hole portions 142b. The hole portions 142a let the air in the housing 140 flow toward the heat exchangers 150. The hole portions 142b let the cooled air from the heat exchangers 150 flow into the housing 140.

One each fan 151 is disposed between the heat exchangers 150 and the hole portions 142a of the bracket 142. The fans 151 let air circulate between the heat exchangers 150 and the housing 140. The fans 151 are centrifugal fans, for example. The interior of the housing 140 is sealed. The interior of the housing 140 and the heat exchangers 150 are connected in the sealed state to suppress or avoid entry of outside air. The housing 140 itself is sealed. A motor 152 for driving the fans 151 is disposed adjacent to the heat exchangers 150.

A partition wall portion 145 is disposed in the interior of the bracket 142 (in the inner surface). The partition wall portion 145 is configured to suppress a situation where the air flowing from the heat exchangers 150 into the housing 140 flows to the first air passage portions 134 of the stator 130 (guides the air). As with the partition wall portion 46 in the first embodiment (refer to Fig. 5), the partition wall portion 145 is disposed in the interior of the bracket 142 (in the inner surface) in an annular shape when viewed in the axial direction. The partition wall portion 145 is one example of a second partition wall portion.

Other configurations of the second embodiment are the same as those of the first embodiment.

Next, referring to Fig. 8, the circulation of air in a generator 101 will be described.

First, as illustrated in Fig. 8, high-temperature air in the vicinity of the coil 133 is sucked by the fans 151 into the heat exchangers 150. This allows the air to be cooled. The cooled, low-temperature air is released into the housing 140. The low-temperature air released into the housing 140 flows into the first air passage portions 134 of the stator 130 via the first hole portions 123 of the rotor 120 and the second air passage portions 135 of the stator 130 (or via the first hole portions 123). The generator 101 is a wind generator and thus rotates at a relatively low speed. Thus, even when the rotor 120 rotates, the air can flow from the first hole portions 123 and the second hole portions 124 of the rotor 120 to the first air passage portions 134 of the stator 130. In addition, the air flowing through the first air passage portions 134 travels in the axial direction (upward and toward the heat exchangers 150) while being cooled by a cooling liquid flowing through the flow passage 141c of the housing 140. The air is then sucked again by the fans 151 into the heat exchangers 150.

The second embodiment can achieve the following advantages.

In the second embodiment, as described above, the stator 130 includes the first air passage portions 134 through which air passes. The first air passage portions 134 are formed in the outer peripheral side of the stator 130 to penetrate the stator 130 in the axial direction. The air circulates in the housing 140 through the first hole portions 123 of the rotor 120 and the first air passage portions 134 of the stator 130. Thus, unlike the case where the first air passage portions 134 are not formed at the stator 130. The air can be easily circulated in the housing 140. Thus, the interior of the generator 101 can be efficiently cooled.

In the second embodiment, as described above, the flow passage 141c for flowing a cooling water for cooling the interior of the housing 140 is formed opposed to the first air passage portions 134 of at the stator 130. Thus, the cooling liquid can cool the air flowing through the first air passage portions 134 of the stator 130. As a result, the interior of the generator 101 can be cooled in a more efficient manner.

In the second embodiment, as described above, the stator 130 includes the second air passage portions 135. The second air passage portions 135 are configured to penetrate the stator 130 in the radial direction and are connected to the first air passage portions 134. Thus, the number of air flow passages can be increased as much as the second air passage portions 135 are formed. As a result, the interior of the generator 101 can be cooled in a more efficient manner.

In the second embodiment, as described above, the plurality of second hole portions 124 is formed at the rotor 120. The second hole portions 124 are configured to penetrate the rotor 120 in the radial direction and correspond to the second air passage portions 135 of the stator 130. Thus, the air can smoothly flow from the rotor 120 side to the stator 130 side through the second hole portions 124.

In the second embodiment, as described above, the partition wall portions 145 are disposed in the interior of the housing 140 at the heat exchanger 150 side. The partition wall portions 145 suppress a situation where the air flowing from the heat exchangers into the housing 140 flows to the first air passage portions 134 of the stator 130. Thus, the air cooled by the heat exchangers 150 can be prevented from flowing again into the heat exchangers 150 without passing through the rotor 120 (without cooling the interior of the housing 140).

In the second embodiment, as described above, the interior of the housing 140 and the heat exchangers 150 are connected together in the sealed state. The generator 101 is a wind generator. If a wind generator is installed in the ocean, the parts and others in the generator may suffer corrosion by salty air in the ocean. In this regard, the generator 101 is configured such that the interior of the housing 140 and the heat exchangers 150 are connected together in the sealed state. Thus, the parts and others in the interior of the generator 101 can be prevented from suffering corrosion by salty air in the ocean.

Other advantages of the second embodiment are the same as those of the first embodiment.

The embodiments disclosed herein are examples in all respects and should not be considered as limitative. The scope of the present disclosure is represented by the scope of the claims, not by the foregoing descriptions of the embodiments. The present disclosure includes all modifications in meaning and scope equivalent to the scope of the claims.

For instance, the first and second embodiments respectively illustrate exemplary generators to which the present disclosure is applied. Instead of this, the present disclosure may be applied to rotating electrical machines other than a generator (such as a motor), for example.

In the first and second embodiments, generators for use in wind generation are suggested as examples. Instead of this, generators may be used for power generation other than wind generation, for example.

In the first (second) embodiment, the partition wall portions 44 (144) are disposed in the inner surface of the bracket 41 (141) as an example. Instead of this, the partition wall portions 44 (144) may be disposed in a region other than the inner surface of the bracket 41 (141), as far as the partition wall portions 44 (144) can partition the housing 40 (140) into a plurality of air circulation regions. For example, the partition wall portions 44 (144) may be arranged at a position separated in the axial direction from the inner surface of the bracket 41 (140).

In the first (second) embodiment, the plurality of partition wall portions 44 (144) is disposed in the interior of the housing 40 (140) at approximately equiangular intervals when viewed in the axial direction, as an example. Instead of this, the plurality of partition wall portions 44 (144) may be arranged in an uneven form, not at approximately equiangular intervals when viewed in the axial direction, for example.

In the first (second) embodiment, the plurality of (four) partition wall portions 44 (144) is disposed as an example. Instead of this, a number other than four of partition wall portions 44 (144) may be disposed, for example.

In the first embodiment, the two each fans 61a and 61b are disposed between the heat exchangers 50 and the partition wall portions 44, as one example. The fans 61a and 61b circulate the air between the heat exchangers 50 and the partition wall portions 44. Instead of this, one each fan may be disposed, for example. In the first embodiment, the fans 61a and 61b are disposed on the outer peripheral side of the bracket 42, as an example. Instead of this, the fans 61a and 61b may be disposed in the housing 40, for example.

In the second embodiment, the one each fan 151 is disposed in the heat exchangers 150, as an example. Instead of this, a plurality of fans may be disposed, for example.

In the first (second) embodiment, the number (four) of the partition wall portions 44 (144) and the number (four) of the heat exchangers 50 (150) are the same, as an example. Instead of this, the number of the partition wall portions 44 (144) and the number of the heat exchangers 50 (150) may be different, for example.

In the first and second embodiments, a plurality of heat exchangers is disposed in the outer surface of the housing at approximately equiangular intervals when viewed in the axial direction, as an example. Instead of this, the plurality of heat exchangers may be arranged in an uneven form, not at approximately equiangular intervals when viewed in the axial direction, for example.

In the first and second embodiments, the heat exchangers are disposed in the outer surface of the housing (bracket) in the axial direction as one example. Instead of this, the heat exchangers may be disposed in the outer surface of the housing (bracket) in the radial direction, for example.

In the first embodiment, the partition wall portion 46 is disposed in the inner surface of the bracket 42, as an example. Instead of this, the partition wall portion 46 may be disposed in a region other than the inner surface of the bracket 42, as far as the partition wall portion 46 can suppress a situation where the air flowing from the heat exchangers 50 into the housing 40 flows to the gap 45 between the rotor 20 and the stator 30. For example, the partition wall portion 46 may be arranged at a position separated from the inner surface of the bracket 42 in the axial direction.

In the first (second) embodiment, the partition wall portion 46 (145) is disposed in the interior of the housing 40 (140) in an annular form when viewed in the axial direction, as an example. Instead of this, the partition wall portion 46 (145) may be disposed in the interior of the housing 40 (140) in a form other than the annular form when viewed in the axial direction, for example.

In the first and second embodiments, the generator has a flat shape in which the axial length L1 is shorter than the radial length L2 (L1 < L2), as an example. Instead of this, the generator may have a shape in which the axial length L1 is longer than the radial length L2 (L1 > L2), for example.

In the first and second embodiments, the generator is a low/medium-speed generator, as an example. Instead of this, the generator may be a high-speed generator, for example.

In the first and second embodiments, the heat exchangers are plate-type heat exchangers, as an example. Instead of this, the heat exchangers may be tube-type heat exchangers other than plate-type heat exchangers, for example. Alternatively, the heat exchangers may have radiating fins.

In the first and second embodiments, air circulates in the housing. Instead of this, the generator may be configured to circulate a gas other than the air in the housing, for example.

In the second embodiment, the stator has three stator portions, as an example. Instead of this, the stator may have a number other than three of stator portions, for example.

In the second embodiment, the stator has the three stator portions and the second air passage portions between the adjacent stator portions, as an example. Instead of this, the stator may have one stator portion and a second air passage portion formed by a penetration hole, for example.

In the second embodiment, the stator has the notch-shaped first air passage portions, as an example. Instead of this, the stator may have first air passage portions formed by penetration holes, for example.

In the second embodiment, the stator is provided with the six first air passage portions (at approximate 60-degree intervals) when viewed in the axial direction, as an example. Instead of this, the stator may be provided with a number other than six of first air passage portions, for example.

In the second embodiment, the first air passage portions have a central angle of approximate 20 degrees when viewed in the axial direction, as an example. Instead of this, the first air passage portions may have a central angle of other than approximate 20 degrees.

In the second embodiment, the rotor is provided with two hole portions in the axial direction, as an example. Instead of this, the rotor may be provided with one or three or more second hole portions, for example.

In the second embodiment, the rotor is provided with the 14 second hole portions in the circumferential direction, as an example. Instead of this, the rotor may be provided with a number other than 14 of second hole portions, for example.

In the second embodiment, the stator is provided with the first air passage portions and the second air passage portions, and the rotor is provided with the first hoe portions and the second hole portions, as an example. Instead of this, the stator may be provided with the first air passage portions but may not be provided with the second air passage portions, for example. In addition, the rotor may be provided with the first hole portions but may not be provided with the second hole portions.

As described above, the rotating electrical machine in the first aspect of the present disclosure includes: a rotor having a hole portion penetrating in the axial direction; a stator arranged so as to be opposed to the outer peripheral portion of the rotor; a housing storing the rotor and the stator therein; a plurality of heat exchangers that is attached to the outer surface of the housing to cool a gas circulating in the housing through the hole portion of the rotor and a gap between the rotor and stator; and a first partition wall portion that is disposed in the interior of the housing to partition the interior of the housing into a plurality of gas circulation regions.

In the rotating electrical machine in the first aspect, as described above, the plurality of heat exchangers is attached to the outer surface of the housing to cool a gas circulating in the housing. In addition, the first partition wall portions for partitioning the interior of the housing are disposed in the interior of the housing. Thus, a gas circulating in the housing can be prevented from flowing beyond the circulation regions partitioned by the first partition wall portions. As a result, the gas can be efficiently cooled by the heat exchangers. Therefore, the interior of the rotating electrical machine can be sufficiently cooled.

The housing of the rotating electrical machine in the second aspect of the present disclosure stores the rotor and the stator. The housing includes the plurality of heat exchangers that is attached to the outer surface of the housing to cool a gas circulating in the housing and the partition wall portions that are disposed in the interior of the housing to partition the interior of the housing.

In the housing of the rotating electrical machine in the second aspect, as described above, the plurality of heat exchangers for cooling a gas circulating in the housing is attached to the outer surface of the housing. In addition, the partition wall portions for partitioning the interior of the housing are disposed in the interior of the housing. Thus, the gas circulating in the housing can be prevented from flowing beyond the circulation regions partitioned by the partition wall portions. This makes it possible to efficiently guide the gas toward the heat exchangers. As a result, the gas can be efficiently cooled by the heat exchangers. Therefore, the interior of the rotating electrical machine can be sufficiently cooled.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A housing (40, 140) of a rotating electrical machine (10, 101), comprising:
a plurality of heat exchangers (50, 150) attached to an outer surface of the housing to cool a gas circulating in the housing; and
a first partition wall portion (44, 144) disposed in an interior of the housing to partition the interior of the housing.

2. A rotating electrical machine, comprising:
the housing according to Claim 1;
a rotor (20, 120) having a first hole portion (23, 123) extending in an axial direction thereof and being housed in the interior of the housing; and
a stator (30, 130) housed in the interior of the housing and disposed opposed to an outer peripheral portion of the rotor.

3. The rotating electrical machine according to Claim 2, wherein a plurality of the first partition wall portions is disposed to radially extend in a radial direction in the interior of the housing to partition the interior of the housing in a circumferential direction, wherein preferably the plurality of first partition wall portions is disposed at approximately equiangular intervals when viewed in the axial direction.

4. The rotating electrical machine according to any one of Claims 2 to 3, further comprising a fan (61a, 61b, 151) disposed independently from the rotor between the heat exchangers and the first partition wall portions to circulate the gas between the heat exchangers and the first partition wall portions.

5. The rotating electrical machine according to any one of Claims 2 to 4, wherein
the plurality of heat exchangers is attached to an outer surface of the housing in the axial direction, and
the same number of first partition wall portions as the number of the plurality of heat exchangers is configured to partition the interior of the housing into a plurality of gas circulation regions corresponding to the heat exchangers when viewed in the axial direction.

6. The rotating electrical machine according to any one of Claims 2 to 5, wherein the plurality of heat exchangers is disposed in the outer surface of the housing at approximately equiangular intervals when viewed in the axial direction.

7. The rotating electrical machine according to any one of Claims 2 to 6, wherein
the stator includes a first gas passage portion (134) disposed at an outer peripheral side of the stator and configured to penetrate the stator in the axial direction and let the gas pass through, and
the gas circulates in the housing through the first hole portion of the rotor and the first gas passage portion of the stator, wherein preferably the housing includes at least a passage (141c) disposed at a portion of the stator opposed to the first gas passage portion to flow cooling water for cooling the interior of the housing.

8. The rotating electrical machine according to Claim 7, wherein the stator further includes a second gas passage portion (135) configured to penetrate the stator in the radial direction and is connected to the first gas passage portion, wherein preferably the rotor includes a second hole portion (124) configured to penetrate the rotor in the radial direction at a position corresponding to the second gas passage portion of the stator.

9. The rotating electrical machine according to any one of Claims 7 to 8, further comprising a second partition wall portion (145) disposed in the interior of the housing at the heat exchanger side to suppress a situation where a gas flowing from the heat exchangers into the housing flows to the first gas passage portion of the stator.

10. The rotating electrical machine according to any one of Claims 2 to 6, further comprising a third partition wall portion (46) disposed in the interior of the housing at the heat exchanger side to suppress a situation where a gas flowing from the heat exchangers into the housing flows to a gap between the rotor and the stator, wherein the gas circulates in the housing through the first hole portion of the rotor and the gap between the rotor and the stator, wherein preferably the third partition wall portion is disposed in an annual form when viewed in the axial direction.

11. The rotating electrical machine according to any one of Claims 2 to 10, wherein the interior of the housing and the heat exchangers are connected together in a sealed state to suppress entry of outside air.

12. The rotating electrical machine according to Claim 11, comprising a generator (1) for wind generation.

13. The rotating electrical machine according to any one of Claims 2 to 12, wherein the plurality of heat exchangers is attached to the outer surface of the housing in the axial direction, the rotating electrical machine further comprising a passage (41c) that is disposed independently from the heat exchangers in a surface of the housing in the radial direction to flow cooling water for cooling the interior of the housing.

14. The rotating electrical machine according to any one of Claims 2 to 13, having a flat shape in which axial length is shorter than radial length.

15. The rotating electrical machine according to any one of Claims 2 to 14, being applied to a low/medium-speed rotating electrical machine.
